# EUROPÄISCHE PATENTSCHRIFT

(11) **EP 3 705 740 B1**
(45) Veröffentlichungstag und Bekanntmachung des Hinweises auf die Patenterteilung: **23.02.2022**
(21) Anmeldenummer: 20160365.1
(22) Anmeldetag: 02.03.2020
(51) Int. Cl.: F16B 39/24

(54) **SCHRAUBVERBINDUNG UND VERFAHREN ZUR LOSDREHSICHERUNG DER SCHRAUBVERBINDUNG**
SCREW CONNECTION AND METHOD FOR PREVENTING THE LOOSENING OF THE SCREW CONNECTION
RACCORDEMENT VISSÉ ET PROCÉDÉ DE SÉCURITÉ ANTI-LIBÉRATION DU RACCORDEMENT VISSÉ

(30) Priorität: 07.03.2019 DE 102019105759
(43) Veröffentlichungstag der Anmeldung: 09.09.2020
(73) Patentinhaber: MAN Truck & Bus SE, 80995 München (DE)
(72) Erfinder: Hestermann, Ines, 80995 München (DE); Hamel, Reinhard, 80995 München (DE)
(74) Vertreter: v. Bezold & Partner Patentanwälte - PartG mbB

(56) Entgegenhaltungen:
- DE-A1- 3 212 811
- DE-A1- 4 429 312
- DE-U1-202011 103 330

## Beschreibung

Die Erfindung betrifft eine Schraubverbindung und ein Verfahren zur Losdrehsicherung einer Schraubverbindung.

Zur Losdrehsicherung von Schraubenverbindungen können Sicherungsscheiben verwendet werden. Die Sicherungsscheiben können beispielsweise speziell gestaltete Radialrippen aufweisen. Die Radialrippen können sich beispielsweise vollflächig nur auf einer Seite des Sicherungsscheibe befinden oder vollflächig auf beiden Seiten der Sicherungsscheibe. Bei der Montage der Schraubverbindung können sich die Radialrippen der Sicherungsscheibe durch die aufgebrachte Vorspannkraft in die jeweilige Gegenlage einprägen. Der dadurch entstehende Formschluss kann zuverlässig ein selbsttätiges Lösen der Schraubverbindung verhindern, selbst unter starken Vibrationen und dynamischen Belastungen wie beispielsweise in einem Kraftfahrzeug. Sicherungsscheiben mit Radialrippen werden bereits seit langer Zeit im Wesentlichen unverändert verwendet.

Die DE 44 29 312 A1 betrifft eine Unterlegscheibe, die als Schraubsicherung ausgebildet ist und beidseitig mit zahnartigen Profilierungen versehen ist.

Die DE 32 12 811 A1 betrifft eine Unterlegscheibe für Gewindebefestigungsmittel mit einer Nockenausbildung, wobei die eine Scheibenseite einen inneren, mit der genannten Nockenausbildung zusammenwirkenden Nockenringbereich und die andere Scheibenseite einen werkstückseitigen, reibungserhöhenden Arbeitsringbereich aufweist.

Die DE 20 2011 103330 U1 offenbart eine Sicherungsscheibe für Verschraubungen mit einer Aufnahmebohrung und einer Ringfläche, wobei die Ringfläche auf ihren beiden Seiten mit Rippen versehen ist.

Der Erfindung liegt die Aufgabe zu Grunde, eine alternative und/oder verbesserte Technik zur Losdrehsicherung einer Schraubverbindung zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Die Erfindung schafft eine Vorrichtung zur Losdrehsicherung einer Schraubverbindung. Die Vorrichtung weist einen scheibenförmigen Körper mit einer Vorderseite, einer Rückseite und einem, vorzugsweise zentralem, Durchgangsloch, das die Vorderseite mit der Rückseite verbindet, auf. Die Vorderseite und die Rückseite weisen jeweils eine innenliegende Ringfläche, die (zweckmäßig im unmontierten Zustand der Vorrichtung) eben ist, und eine außenliegende Ringfläche, die (zweckmäßig im unmontierten Zustand der Vorrichtung) (zum Beispiel teilweise oder vollständig) profiliert ist (/eine profilierte Oberfläche aufweist), auf.

Erfindungsgemäß wird die Vorrichtung zusammen mit einer Schraube mit profilierter (z. B. gerippten) Schraubenkopfunterseite oder einer Mutter mit profilierter (zum Beispiel gerippter) Unterseite verwendet. Beim Anziehen der Schraube oder der Mutter kann sich die profilierte Unterseite des Schraubenkopfes oder der Mutter in die innenliegende, ebene Ringfläche der Vorderseite oder der Rückseite des scheibenförmigen Körpers einprägen. Währenddessen kann sich die außenliegende, profilierte Ringfläche des scheibenförmigen Körpers in eine Anlagefläche eines mit der Schraubverbindung zu verbindenden Bauteils einprägen. So besteht sowohl ein Formschluss zwischen dem Bauteil und dem scheibenförmigen Körper als auch zwischen dem scheibenförmigen Körper und der Schraube oder der Mutter. Dies ergibt eine sehr wirkungsvolle Losdrehsicherung. Die Vorrichtung kann vorzugsweise beidseitig verwendbar sein, um fehlerhafte Montagen aufgrund einer falschen Orientierung des scheibenförmigen Körpers auszuschließen.

Es ist möglich, dass die Profilierung der außenliegenden Ringflächen bspw. in den scheibenförmigen Körper eingeprägt ist, z. B. bei dessen Herstellung.

In einem Ausführungsbeispiel grenzen die innenliegende Ringfläche und die außenliegende Ringfläche der Vorderseite und/oder der Rückseite aneinander an. Dies kann den Vorteil haben, dass die innenliegende, ebene Ringfläche direkt in die außenliegende, profilierte Ringfläche übergeht.

In einem weiteren Ausführungsbeispiel weist der scheibenförmige Körper einen Innendurchmesser auf, an den die innenliegende Ringfläche der Vorderseite und/oder der Rückseite angrenzt. Es ist möglich, dass der scheibenförmige Körper einen Außendurchmesser aufweist, an den die außenliegende Ringfläche der Vorderseite und/oder der Rückseite angrenzt. Zweckmäßig können die innenliegenden Ringflächen und die außenliegenden Ringflächen somit vollständig die Vorderseite und die Rückseite des scheibenförmigen Körpers bilden.

In einer Ausführungsform sind die innenliegenden Ringfläche der Vorderseite und der Rückseite spiegelsymmetrisch zueinander bezüglich einer Mittelebene des scheibenförmigen Körpers sind. Es ist möglich, dass die außenliegenden Ringflächen der Vorderseite und der Rückseite spiegelsymmetrisch zueinander bezüglich einer Mittelebene des scheibenförmigen Körpers sind. Zweckmäßig können die Vorderseite und die Rückseite im Wesentlichen spiegelsymmetrisch zueinander bezüglich einer Mittelebene des scheibenförmigen Körpers sein. Damit kann eine Fehlmontage des scheibenförmigen Körpers aufgrund einer falschen Orientierung ausgeschlossen werden.

In einer weiteren Ausführungsform liegt ein Flächeninhalt der außenliegenden Ringfläche der Vorderseite und/oder der Rückseite in einem Bereich zwischen 25 % und 200 %, vorzugsweise in einem Bereich zwischen 50 % und 100 %, besonders bevorzugt in einem Bereich zwischen 50 % und 75 %, eines Flächeninhalts der innenliegenden Ringfläche der Vorderseite und/oder Rückseite. Eine Ringbreite der innenliegenden Ringfläche der Vorderseite und/oder Rückseite kann kleiner, gleich oder größer als eine Ringbreite der außenliegenden Ringfläche der Vorderseite und/oder Rückseite sein. Die innenliegende Ringfläche der Vorderseite und/oder der Rückseite kann flächenmäßig kleiner, gleich oder größer als die außenliegende Ringfläche der Vorderseite und/oder der Rückseite sein.

In einer weiteren Ausführungsform ist der scheibenförmige Körper als eine Unterlegscheibe ausgebildet. Somit kann der scheibenförmige Körper als eine Unterlegscheibe zwischen einem Schraubenkopf oder einer Mutter und einem Bauteil mit Loch verwendet werden.

In einer Ausführungsvariante ist die außenliegende Ringfläche der Vorderseite und/oder Rückseite zum Einprägen in eine Anlagefläche eines mittels der Schraubverbindung zu verbindenden Bauteils ausgebildet. Damit kann ein Formschluss zwischen dem scheibenförmigen Körper und dem Bauteil zur Losdrehsicherung hergestellt werden.

In einer weiteren Ausführungsvariante ist die außenliegende Ringfläche der Vorderseite und/oder Rückseite gegenüber der innenliegenden Ringfläche der Vorderseite und/oder der Rückseite erhaben (zum Beispiel um weniger als 2 mm oder um weniger als 1 mm). Damit kann sichergestellt werden, dass sich die außenliegende, profilierte Ringfläche in die Anlagefläche des mit der Schraubverbindung zu verbindenden Bauteils einprägt, bevor die innenliegende profilierte Ringfläche in Kontakt mit der Anlagefläche kommt.

In einem Ausführungsbeispiel ist die außenliegende Ringfläche der Vorderseite und/oder der Rückseite gerippt. Alternativ oder zusätzlich weist die außenliegende Ringfläche der Vorderseite und/oder der Rückseite mehrere Rippen, vorzugsweise Radialrippen, auf. Vorzugsweise kann eine Länge der Rippen größer als eine Breite und/oder eine Höhe der Rippen sein. Bevorzugt kann eine Höhe der Rippen entlang einer Länge der Rippen konstant sein. Zweckmäßig können die Rippen vor der Montage des scheibenförmigen Körpers, bevorzugt bei der Herstellung des scheibenförmigen Körpers, in die außenliegende Ringfläche eingeprägt werden.

In einem weiteren Ausführungsbeispiel ist die außenliegende Ringfläche der Vorderseite und/oder der Rückseite verzahnt und/oder weist mehrere, voneinander beabstandete Vorsprünge, vorzugsweise Noppen oder Zähne, auf.

Die Erfindung betrifft eine Schraubverbindung mit einer Vorrichtung zur Losdrehsicherung wie hierin offenbart. Die Schraubverbindung weist ferner eine Schraube mit einem Schraubenkopf, der eine (zum Beispiel teilweise oder vollständig) (zum Beispiel bereits vor der Montage / dem Anziehen der Schraube) profilierte (zum Beispiel gerippte oder verzahnte) Unterseite aufweist, die dazu ausgebildet ist, sich in die innenliegende Ringfläche der Vorderseite oder der Rückseite des scheibenförmigen Körpers einzuprägen. Alternativ kann die profilierte Unterseite (zum Beispiel nach der Montage / dem Anziehen der Schraube) in die innenliegende Ringfläche der Vorderseite oder der Rückseite des scheibenförmigen Körpers eingeprägt sein.

Alternativ kann die Schraubverbindung statt einer Schraube auch beispielsweise eine Mutter mit einer (zum Beispiel teilweise oder vollständig) profilierten (zum Beispiel gerippten oder verzahnten) Unterseite (zum Beispiel bereits vor der Montage / dem Anziehen der Mutter profiliert) aufweisen. Die profilierte Unterseite kann zweckmäßig dazu ausgebildet sein, sich in die innenliegende Ringfläche der Vorderseite oder der Rückseite des scheibenförmigen Körpers einzuprägen. Alternativ kann die profilierte Unterseite zweckmäßig nach der Montage / dem Anziehen der Mutter in die innenliegende Ringfläche der Vorderseite oder der Rückseite des scheibenförmigen Körpers eingeprägt sein.

In einer Ausführungsform kann der Schraubenkopf oder die Mutter einen Außendurchmesser aufweisen, der gleich oder kleiner als ein Außendurchmesser der innenliegenden Ringfläche der Vorderseite und/oder der Rückseite des scheibenförmigen Körpers ist. Alternativ oder zusätzlich kann der Außendurchmesser des Schraubenkopfes oder der Mutter gleich oder kleiner als ein Innendurchmesser der außenliegenden Ringfläche der Vorderseite und/oder der Rückseite des scheibenförmigen Körpers sein. Damit kann verhindert werden, dass die profilierte Unterseite des Schraubenkopfes oder der Mutter in Kontakt mit der außenliegenden, profilierten Ringfläche der Vorderseite oder der Rückseite des scheibenförmigen Körpers kommt. Somit kann ein Einprägen der profilierten Unterseite des Schraubenkopfes oder der Mutter in die innenliegende, ebene Ringfläche der Vorderseite oder der Rückseite des scheibenförmigen Körpers gewährleistet sein.

In einer weiteren Ausführungsform weist die Schraubverbindung ferner ein Bauteil mit einem Loch (zum Beispiel Sackloch, Durchgangsloch, gewindefreies Loch, Gewindeloch usw.) und einer (zum Beispiel vor der Montage/dem Anziehen der Schraube oder der Mutter) ebenen Anlagefläche, die das Loch umgibt, auf. Die außenliegende Ringfläche der Vorderseite oder der Rückseite des scheibenförmigen Körpers ist dazu ausgebildet, sich in die ebene Anlagefläche einzuprägen. Alternativ kann die außenliegende Ringfläche der Vorderseite oder der Rückseite (zum Beispiel nach der Montage / dem Anziehen der Schraube oder der Mutter) in die ebene Anlagefläche eingeprägt sein.

Zweckmäßig kann eine Härte der außenliegenden Ringflächen größer als eine Härte der ebenen Anlagefläche sein, vorzugsweise mit einem Härteunterschied von größer oder gleich 40 HV.

Die Erfindung betrifft auch ein Verfahren zur Losdrehsicherung einer Schraubverbindung mittels einer Vorrichtung wie hierin offenbart. Das Verfahren weist ein Verwenden des scheibenförmigen Körpers als eine Unterlegscheibe für eine Schraube mit einem Schraubenkopf, der eine (zum Beispiel teilweise oder vollständig) profilierte (zum Beispiel gerippte oder verzahnte) Unterseite aufweist, oder für eine Mutter, die eine (zum Beispiel teilweise oder vollständig) profilierte (zum Beispiel gerippte oder verzahnte) Unterseite (Unterlegscheiben-Kontaktseite) aufweist. Zweckmäßig kann die Unterseite bereits vor dem Anziehen der Schraube oder der Mutter profiliert sein. Das Verfahren weist ferner ein Anziehen der Schraube oder der Mutter auf. Beim Anziehen prägt sich die profilierte Unterseite der Schraube oder der Mutter in den innenliegenden Ringabschnitt von einer von der Vorderseite und der Rückseite des scheibenförmigen Körpers ein, vorzugsweise zum Herstellen eines Formschlusses zwischen der Schraube oder der Mutter und dem scheibenförmigen Körper. Beim Anziehen prägt sich der außenliegende Ringabschnitt der anderen von der Vorderseite und der Rückseite des scheibenförmigen Körpers in eine ebene Anlagefläche eines Bauteils ein, vorzugsweise zum Herstellen eines Formschlusses zwischen dem scheibenförmigen Körper und dem Bauteil.

In einer Ausführungsvariante ist der scheibenförmige Köper beidseitig verwendbar, mit wahlweise der Vorderseite oder der Rückseite in Kontakt mit dem Bauteil. Somit kann zweckmäßig einer Fehlmontage verhindert werden.

Es ist möglich, die Vorrichtung, die Schraubverbindung und/oder das Verfahren wie hierin offenbart für jegliche Schraubverbindung, bei der eine Losdrehsicherung erfordert oder gewünscht ist, zu verwenden. Beispielsweise kann die Vorrichtung, die Schraubverbindung und/oder das Verfahren bei einem Kraftfahrzeug, vorzugsweise einem Nutzfahrzeug (zum Beispiel Lastkraftwagen oder Omnibus) verwendet werden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer Vorrichtung zur Losdrehsicherung gemäß einem Ausführungsbeispiel der vorliegenden Offenbarung;
- Figur 2: eine Draufsicht auf die beispielhafte Vorrichtung;
- Figur 3: eine Schnittansicht durch die beispielhafte Vorrichtung entlang der Linie A-A aus Figur 2;
- Figur 4: eine Detailansicht des Details C aus Figur 2;
- Figur 5: eine Detailansicht des Details B aus Figur 3;
- Figur 6: eine perspektivische Ansicht einer Schraube mit profilierter Schraubenkopfunterseite;
- Figur 7: zwei Ansichten einer Mutter mit profilierter Mutternunterseite; und
- Figur 8: eine Übersicht-Schnittansicht und eine Detail-Schnittansicht des Details A aus der Übersicht-Schnittansicht, die eine Verwendung der beispielhaften Vorrichtung zur Losdrehsicherung zeigen.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

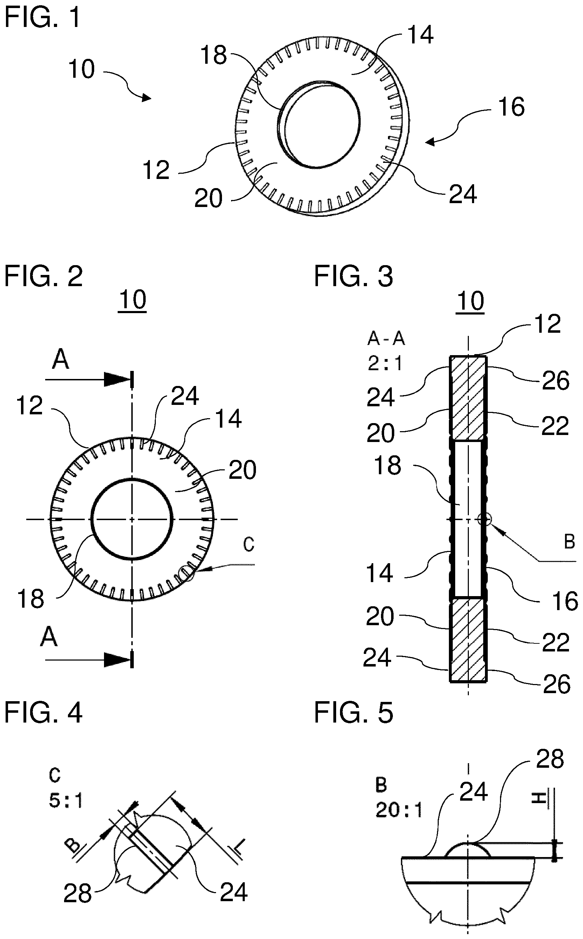

Die Figuren 1 bis 3 zeigen unterschiedliche Ansichten einer Vorrichtung 10 zur Losdrehsicherung einer Schraubverbindung bzw. einer Verschraubung. Die Vorrichtung 10 kann mit jeglicher Schraubverbindung zur Verbindung mehrerer Bauteile verwendet werden. Beispielsweise kann die Vorrichtung 10 zur Losdrehsicherung einer Schraubverbindung eines Kraftfahrzeugs, vorzugsweise eines Nutzfahrzeug (zum Beispiel Lastkraftwagen oder Omnibus), verwendet werden.

Die Vorrichtung 10 weist einen, vorzugsweise kreisrunden, scheibenförmigen Körper 12 auf. Der scheibenförmige Körper 12 weist eine Vorderseite 14 und eine Rückseite 16 auf. Die Vorderseite 14 und die Rückseite 16 sind in entgegengesetzte Richtungen gerichtet. Der scheibenförmige Körper 12 weist ein Durchgangsloch 18 auf. Das Durchgangsloch 18 verbindet die Vorderseite 14 mit der Rückseite 16. Zweckmäßig kann das Durchgangsloch 18 mittig im scheibenförmigen Körper 12 angeordnet sein. Das Durchgangsloch 18 kann zur Durchführung eines Schraubschafts oder einer Gewindestange durch den scheibenförmigen Körper 12 hindurch ausgebildet sein. Zweckmäßig ist die Vorrichtung 10 als eine Unterlegscheibe für eine Schraube oder eine Mutter ausgeführt.

Die Vorderseite 14 und die Rückseite 16 weisen jeweils eine (radial) innenliegende Ringfläche 20, 22 und eine (radial) außenliegende Ringfläche 24, 26 auf. Die innenliegenden Ringflächen 20, 22 weisen eine im Wesentlichen ebene Oberfläche auf, das heißt, sie sind eben. Die außenliegenden Ringflächen 24, 26 weisen eine profilierte Oberfläche auf, das heißt sie sind profiliert. Die Profilierung kann vollflächig bezüglich der außenliegenden Ringflächen 24, 26 sein, wie dargestellt ist. Es ist auch möglich, dass die außenliegenden Ringflächen 24, 26 nur teilweise profiliert sind.

Die innenliegenden Ringflächen 20, 22 können das Durchgangsloch 18 begrenzen. In anderen Worten, ein Innendurchmesser des scheibenförmigen Körpers 12 grenzt an die innenliegenden Ringflächen 20, 22 an. Ein Außendurchmesser des scheibenförmigen Körpers 12 kann an die außenliegenden Ringflächen 24, 26 angrenzen. Auf der Vorderseite 14 kann die innenliegende Ringfläche 20 an die außenliegende Ringfläche 24 angrenzen. Auf der Rückseite 16 kann die innenliegende Ringfläche 22 an die außenliegende Ringfläche 26 angrenzen.

Besonders bevorzugt sind das Durchgangsloch 18, die innenliegenden Ringflächen 20, 22, die außenliegenden Ringflächen 24, 26 und damit auch der scheibenförmige Körper 12 kreisförmig. Es sind allerdings auch Geometrien umsetzbar, bei der zumindest eines von dem Durchgangsloch 18, den innenliegenden Ringflächen 20, 22 und den außenliegenden Ringflächen 24, 26 von einer Kreisform abweicht. Beispielsweise kann ein Außenumfang des scheibenförmigen Körpers 12, ein Außenumfang der außenliegenden Ringflächen 24 und 26, ein Außenumfang der innenliegenden Ringflächen 20 und 22 und/oder eine Grenzkurve zwischen der innenliegenden Ringflächen 20 oder 22 und der außenliegenden Ringfläche 24 oder 26 auch elliptisch, mehreckig, gewellt oder eine Kombination davon sein.

Die innenliegende Ringfläche 20 der Vorderseite 14 kann flächenmäßig kleiner, gleich oder bevorzugt größer als die außenliegende Ringfläche 24 der Vorderseite 14 sein. Es ist möglich, dass eine Ringbreite der innenliegenden Ringfläche 20 kleiner, gleich oder bevorzugt größer als eine Ringbreite der außenliegenden Ringfläche 24 ist. Vorzugsweise kann ein Flächeninhalt der außenliegenden Ringfläche 24 in einem Bereich zwischen 25 % und 200 %, bevorzugt in einem Bereich zwischen 50 % und 100 %, besonders bevorzugt in einem Bereich zwischen 50 % und 75 %, eines Flächeninhalts der innenliegenden Ringfläche 20 liegen. Die innenliegende Ringfläche 22 der Rückseite 16 und die außenliegende Ringfläche 26 der Rückseite 16 können die gleichen relativen Verhältnisse zueinander aufweisen.

Die außenliegende Ringfläche 24 der Vorderseite 14 ist erhaben gegenüber der innenliegenden Ringfläche 20 der Vorderseite 14. Ebenso ist die außenliegende Ringfläche 26 der Rückseite 16 erhaben gegenüber der innenliegenden Ringfläche 22 der Rückseite 16.

Zweckmäßig ist der scheibenförmige Körper 12 spiegelsymmetrisch aufgebaut. Insbesondere können die Vorderseite 14 und die Rückseite 16, die innenliegenden Ringflächen 20, 22 und die außenliegenden Ringflächen 24, 26 spiegelsymmetrisch bezüglich einer gedachten Mittelebene sein. Die Mittelebene kann den scheibenförmigen Körper 12 mittig zwischen der Vorderseite 14 und der Rückseite 16 schneiden.

Mittels des scheibenförmigen Körpers 12 kann somit eine Losdrehsicherung zwischen dem Bauteil auf einer Seite des scheibenförmigen Körpers 12 und der Schraube oder der Mutter auf der anderen Seite des scheibenförmigen Körpers 12 bereitgestellt werden.

Da sowohl die die Vorderseite 14 als auch die Rückseite 16 die innenliegenden Ringflächen 20, 22 und die außenliegenden Ringflächen 24, 26 aufweisen, kann die Vorrichtung 10 beidseitig verwendet werden. Das heißt, eine Seite von der Vorderseite 14 und der Rückseite 16 kann in Kontakt mit dem Schraubenkopf oder der Mutter sein und die andere Seite von der Vorderseite 14 und der Rückseite 16 kann in Kontakt mit dem zu sichernden/zu verschraubenden Bauteil sein.

Die Figuren 4 und 5 zeigen ein beispielhaftes Profilierungselement der Profilierung der außenliegenden Ringflächen 24, 26. Die Profilierung der außenliegenden Ringflächen 24, 26 kann beispielsweise durch Rippen 28 erfolgen.

Wie dargestellt ist, können beispielsweise Radialrippen verwendet werden, die sich radial in Richtung zu einer Mittelachse des scheibenförmigen Körpers 12 erstrecken. Die Rippen 28 können beispielsweise einen abgerundeten Querschnitt aufweisen (siehe Figur 5). Eine Länge L der Rippen 28 kann größer als eine Breite B der Rippen 28 sein. Eine Höhe H der Rippen 28 kann entlang der Länge L konstant sein. Die Höhe H kann bspw. kleiner als 2 mm, vorzugsweise kleiner als 1 mm sein. Die Breite B der Rippen 28 kann größer als die Höhe H der Rippen 28 sein.

Eine Anordnung, Anzahl und Form der Rippen 28 kann von dem für den jeweiligen Anwendungsfall erforderlichen Anzugsmoment abhängig sein. Eine maximal zulässige Spannung pro Rippenfläche ist nicht zu überschreiten. Ein Lösungsmoment für ein selbständiges Losdrehen ist kleiner als ein Abstützmoment durch die Rippen 28. Eine Rippenform der Rippen 28 kann beliebig sein, solange ein Formschluss mit der jeweiligen Anlagefläche gewährleistet ist. Beispielsweise können die Rippen 28 gradlinig, angeschrägt oder gewellt sein.

Es ist auch möglich, die außenliegenden Ringflächen 24, 26 zusätzlich oder alternativ auf eine andere Art und Weise zu profilieren. Beispielsweise können die außenliegenden Ringflächen 24, 26 verzahnt sein. Die Verzahnung kann beispielsweise eine Vielzahl von Vorsprüngen (Zähnen, Noppen) aufweisen, die verteilt über die außenliegenden Ringflächen 24, 26 angeordnet sind.

Die Profilierung der außenliegenden Ringflächen 24, 26 kann bspw. eingeprägt sein. Damit kann die Vorrichtung 10 einfach und kostengünstig hergestellt werden.

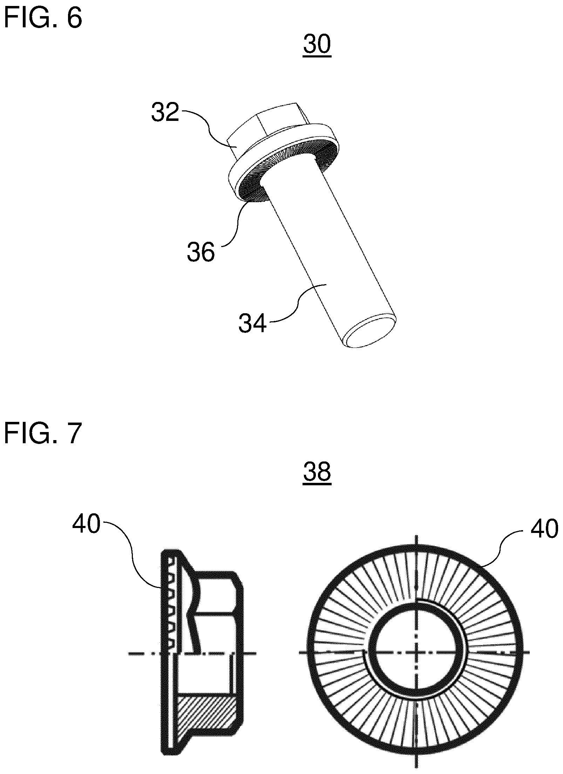

Die Figur 6 zeigt eine Schraube 30, die zusammen mit der Vorrichtung 10 verwendet werden kann.

Die Schraube 30 weist einen Schraubenkopf 32 und einen Schraubenschaft 34 auf. Der Schraubenkopf 32 weist eine profilierte Unterseite 36 auf. Im dargestellten Ausführungsbeispiel ist die Unterseite 36 mit Radialrippen profiliert. Bei der Schraube 30 handelt es sich somit um eine sogenannte Rippschraube. Es sind allerdings auch zusätzliche oder alternative Profilierungen auf der Unterseite 36 möglich, zum Beispiel eine Verzahnung, wie bereits unter Bezugnahme auf die außenliegenden Ringflächen 24, 26 beschrieben wurde.

Die Unterseite 36 des Schraubenkopfes 32 weist einen Außendurchmesser auf, der gleich oder vorzugsweise kleiner als ein Außendurchmesser der innenliegenden Ringflächen 20, 22 des scheibenförmigen Körpers 12 ist.

Die Figur 7 zeigt zwei Ansichten einer Mutter 38, die beispielsweise alternativ zu der Schraube 30 von Figur 6 zusammen mit der Vorrichtung 10 verwendet werden kann.

Die Mutter 38 weist eine profilierte Unterseite 40 auf. Wie dargestellt ist, ist die Unterseite 40 mit Radialrippen profiliert. Bei der Mutter 38 handelt es sich somit um eine sogenannte Rippmutter. Es sind allerdings ebenfalls zusätzliche oder alternative Profilierungen auf der Unterseite 40 möglich, zum Beispiel eine Verzahnung, wie bereits unter Bezugnahme auf die außenliegenden Ringflächen 24, 26 beschrieben wurde.

Die Unterseite 40 der Mutter 38 weist einen Außendurchmesser auf, der gleich oder vorzugsweise kleiner als ein Außendurchmesser der innenliegenden Ringflächen 20, 22 des scheibenförmigen Körpers 12 ist.

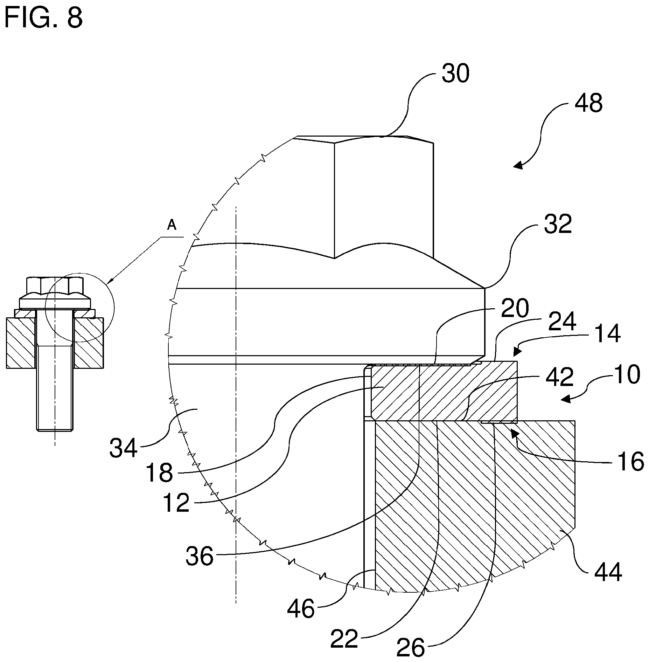

Die Figur 8 zeigt anhand des Beispiels der Schraube 30 von Figur 6, wie die Vorrichtung 10 zur Losdrehsicherung bei einer Schraubverbindung 48 verwendet werden kann.

Die Vorrichtung 10 wird als Unterlegscheibe für die Schraube 30 verwendet. Die Vorrichtung 10 ist zwischen der Unterseite 36 des Schraubenkopfes 32 und einer Anlagefläche 42 eines durch die Verschraubung zu sichernden Bauteils 44 (zum Beispiel ein Tragarm) positioniert. Der Schraubenschaft 34 ist in einem Loch 46 des Bauteils 44 positioniert.

Beim Anziehen der Schraube 30 prägt sich die Profilierung der Unterseite 36 des Schraubenkopfes 32 in die ebene Oberfläche der innenliegenden Ringfläche 20 der Vorderseite 14 des scheibenförmigen Körpers 12 ein. Damit kann ein Formschluss zwischen der Schraube 30 und dem scheibenförmigen Körper 12 hergestellt werden. Der Formschluss dient als Losdrehsicherung zwischen der Schraube 30 und dem scheibenförmigen Körper 12.

Beim Anziehen der Schraube 30 prägt sich auch die Profilierung der außenliegenden Ringfläche 26 der Rückseite 16 des scheibenförmigen Körpers 12 in die Anlagefläche 42 des Bauteils 44. Damit kann ein Formschluss zwischen dem scheibenförmigen Körper 12 und dem Bauteil 44 hergestellt werden. Der Formschluss dient als Losdrehsicherung zwischen dem scheibenförmigen Körper 12 und dem Bauteil 44.

Da die Schraube 30 formschlüssig an dem scheibenförmigen Körper 12 gehalten ist und der scheibenförmige Körper 12 formschlüssig an dem Bauteil 44 gehalten ist, ist die Schraube 30 auch formschlüssig an dem Bauteil 44 gehalten.

Da die Vorderseite 14 und die Rückseite 16 des scheibenförmigen Körpers 12 jeweils die innenliegende, ebene Ringfläche 20 oder 22 und die außenliegende, profilierte Ringfläche 24 oder 26 aufweisen, kann der scheibenförmige Körper 12 beidseitig verwendet werden. Das heißt, es könnte auch die Rückseite 16 an der Unterseite 36 des Schraubenkopfes 32 anliegen und die Vorderseite 14 könnte an der Anlagefläche 42 des Bauteils 44 anliegen. Dadurch kann eine Fehlmontage aufgrund einer fehlerhaften Ausrichtung der Vorrichtung 10 ausgeschlossen werden.

Bei der Verwendung der Vorrichtung 10 kommt es ferner zu keiner Beschädigung der Anlagefläche 42 auch bei weicheren Materialien sowie lackierten oder pulverbeschichteten Oberflächen. Die Vorrichtung 10 kann auch für Langlöcher oder große Bohrungen verwendet werden. Die Vorrichtung 10 kann auch wiederverwendbar sein.

Zweckmäßig kann sich eine Losdrehsicherung bei einer Härtedifferenz von mindestens 40 HV gegenüber der Anlagefläche 42 zugunsten der außenliegenden Ringflächen 24, 26 und/oder des scheibenförmigen Körpers 12 ergeben. Ein Verhältnis der Härtedifferenz kann gezielt für ein Optimum der Selbstsicherung einstellbar sein.

Alternativ zu der Schraube 30 kann beispielsweise auch die Mutter 38 von Figur 7 verwendet werden. Die profilierte Unterseite 40 der Mutter 38 kann sich beim Anziehen der Mutter 38 je nach Orientierung des scheibenförmigen Körpers 12 in die innenliegende Ringfläche 20 der Vorderseite 14 oder in die innenliegende Ringfläche 22 der Rückseite 16 einprägen. Dadurch kann ein Formschluss zwischen der Mutter 38 und dem scheibenförmigen Körper 12 hergestellt werden.

Die Vorrichtung 10 ermöglicht somit eine zulässige Montage zusammen mit einer Rippschraube (siehe Figuren 6 und 8) oder einer Rippmutter (siehe Figur 7). Es besteht eine definierte Trennfuge und ein Formschluss zwischen der Anlagefläche 42 und einer der außenliegenden, profilierten Ringflächen 24 und 26. Es kommt zu keinem Kontakt zwischen den Profilierungen des scheibenförmigen Körpers 12 mit der profilierten Unterseite 36 der Schraube 30 oder der profilierten Unterseite 40 der Mutter 38, da die profilierten Flächen des scheibenförmigen Körpers 12 außenliegend angeordnet sind. Eine Verschraubung, bei der profilierte Oberflächen aneinander anliegen, wäre hingegen nicht als formschlüssige Losdrehsicherung zulässig.

Es versteht sich, dass nach dem Anziehen der Schraube 30 oder der Mutter 38 die innenliegende Ringfläche 20 oder 22, in die sich die Schraube 30 oder die Mutter 38 eingeprägt hat, nicht mehr eben sein kann. Gleichermaßen kann die Anlagefläche 42 des Bauteils 44 nach dem Anziehen der Schraube 30 oder der Mutter 38 nicht mehr eben sein, nachdem sich die außenliegende Ringfläche 24 oder 26 darin eingeprägt hat.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 10: Vorrichtung zur Losdrehsicherung
- 12: Scheibenförmiger Körper
- 14: Vorderseite
- 16: Rückseite
- 18: Durchgangsloch
- 20: Innenliegende Ringfläche
- 22: Innenliegende Ringfläche
- 24: Außenliegende Ringfläche
- 26: Außenliegende Ringfläche
- 28: Rippe
- 30: Schraube
- 32: Schraubenkopf
- 34: Schraubenschaft
- 36: Unterseite
- 38: Mutter
- 40: Unterseite
- 42: Anlagefläche
- 44: Bauteil
- 46: Loch
- 48: Schraubverbindung

## Patentansprüche

1. Schraubverbindung (48) mit einer Vorrichtung (10) zur Losdrehsicherung der Schraubverbindung (48), wobei die Vorrichtung (10) aufweist:
einen scheibenförmigen Körper (12) mit einer Vorderseite (14), einer Rückseite (16) und einem, vorzugsweise zentralen, Durchgangsloch (18), das die Vorderseite (14) mit der Rückseite (16) verbindet,
wobei die Vorderseite (14) und die Rückseite (16) jeweils eine innenliegende Ringfläche (20, 22), die eben ist, und eine außenliegende Ringfläche (24, 26), die profiliert ist, aufweist,
wobei die Schraubverbindung (48) ferner aufweist:
eine Schraube (30) mit einem Schraubenkopf (32), der eine profilierte Unterseite (36) aufweist, die dazu ausgebildet ist, sich in die innenliegende Ringfläche (20, 22) der Vorderseite (14) oder der Rückseite (16) des scheibenförmigen Körpers (12) einzuprägen, oder die in die innenliegende Ringfläche (20, 22) der Vorderseite (14) oder der Rückseite (16) des scheibenförmigen Körpers (12) eingeprägt ist, oder
eine Mutter (38) mit einer profilierten Unterseite (40), die dazu ausgebildet ist, sich in die innenliegende Ringfläche (20, 22) der Vorderseite (14) oder der Rückseite (16) des scheibenförmigen Körpers (12) einzuprägen, oder die in die innenliegende Ringfläche (20, 22) der Vorderseite (14) oder der Rückseite (16) des scheibenförmigen Körpers (12) eingeprägt ist.

2. Schraubverbindung (48) nach Anspruch 1, wobei:
die innenliegende Ringfläche (20, 22) und die außenliegende Ringfläche (24, 26) der Vorderseite (14) und/oder der Rückseite (16) aneinander angrenzen.

3. Schraubverbindung (48) nach Anspruch 1 oder Anspruch 2, wobei:
der scheibenförmige Körper (12) einen Innendurchmesser aufweist, an den die innenliegende Ringfläche (20, 22) der Vorderseite (14) und/oder der Rückseite (16) angrenzt; und/oder
der scheibenförmige Körper (12) einen Außendurchmesser aufweist, an den die außenliegende Ringfläche (24, 26) der Vorderseite (14) und/oder der Rückseite (16) angrenzt.

4. Schraubverbindung (48) nach einem der vorherigen Ansprüche, wobei:
die innenliegenden Ringflächen (20, 22) der Vorderseite (14) und der Rückseite (16) spiegelsymmetrisch zueinander bezüglich einer Mittelebene des scheibenförmigen Körpers (12) sind; und/oder
die außenliegenden Ringflächen (24, 26) der Vorderseite (14) und der Rückseite (16) spiegelsymmetrisch zueinander bezüglich einer Mittelebene des scheibenförmigen Körpers (12) sind; und/oder
die Vorderseite (14) und die Rückseite (16) im Wesentlichen spiegelsymmetrisch zueinander bezüglich einer Mittelebene des scheibenförmigen Körpers (12) sind.

5. Schraubverbindung (48) nach einem der vorherigen Ansprüche, wobei:
ein Flächeninhalt der außenliegenden Ringfläche (24, 26) der Vorderseite (14) und/oder der Rückseite (16) in einem Bereich zwischen 25 % und 200 %, vorzugsweise in einem Bereich zwischen 50 % und 100 %, besonders bevorzugt in einem Bereich zwischen 50 % und 75 %, eines Flächeninhalts der innenliegenden Ringfläche (20, 22) der Vorderseite (14) und/oder der Rückseite (16) liegt; und/oder
eine Ringbreite der innenliegenden Ringfläche (20, 22) der Vorderseite (14) und/oder der Rückseite (16) kleiner, gleich oder größer als eine Ringbreite der außenliegenden Ringfläche (24, 26) der Vorderseite (14) und/oder der Rückseite (16) ist; und/oder
die innenliegende Ringfläche (20, 22) der Vorderseite (14) und/oder der Rückseite (16) flächenmäßig kleiner, gleich oder größer als die außenliegende Ringfläche (24, 26) der Vorderseite (14) und/oder der Rückseite (16) ist.

6. Schraubverbindung (48) nach einem der vorherigen Ansprüche, wobei:
der scheibenförmige Körper (12) als eine Unterlegscheibe ausgebildet ist.

7. Schraubverbindung (48) nach einem der vorherigen Ansprüche, wobei:
die außenliegende Ringfläche (24, 26) der Vorderseite (14) und/oder der Rückseite (16) zum Einprägen in eine Anlagefläche (42) eines mittels der Schraubverbindung (48) zu verbindenden Bauteils (44) ausgebildet ist.

8. Schraubverbindung (48) nach einem der vorherigen Ansprüche, wobei:
die außenliegende Ringfläche (24, 26) der Vorderseite (14) und/oder der Rückseite (16) gegenüber der innenliegenden Ringfläche (20, 22) der Vorderseite (14) und/oder der Rückseite (16) erhaben ist.

9. Schraubverbindung (48) nach einem der vorherigen Ansprüche, wobei:
die außenliegende Ringfläche (24, 26) der Vorderseite (14) und/oder der Rückseite (16) gerippt ist; und/oder:
die außenliegende Ringfläche (24, 26) der Vorderseite (14) und/oder der Rückseite (16) mehrere Rippen (28), vorzugsweise Radialrippen, aufweist, wobei vorzugsweise eine Länge (L) der Rippen (28) größer als eine Breite (B) und/oder eine Höhe (H) der Rippen (28) ist und/oder eine Höhe (H) der Rippen (28) entlang einer Länge (L) der Rippen (28) konstant ist.

10. Schraubverbindung (48) nach einem der vorherigen Ansprüche, wobei:
die außenliegende Ringfläche (24, 26) der Vorderseite (14) und/oder der Rückseite (16) verzahnt ist und/oder mehrere, voneinander beabstandete Vorsprünge, vorzugsweise Noppen oder Zähne, aufweist.

11. Schraubverbindung (48) nach einem der vorherigen Ansprüche, wobei der Schraubenkopf (32) oder die Mutter (38) einen Außendurchmesser aufweist, der:
gleich oder kleiner als ein Außendurchmesser der innenliegenden Ringfläche (20, 22) der Vorderseite (14) und/oder der Rückseite (16) des scheibenförmigen Körpers (12) ist; und/oder
gleich oder kleiner als ein Innendurchmesser der außenliegenden Ringfläche (24, 26) der Vorderseite (14) und/oder der Rückseite (16) des scheibenförmigen Körpers (12) ist.

12. Schraubverbindung (48) nach einem der vorherigen Ansprüche, ferner aufweisend:
ein Bauteil (44) mit einem Loch (46) und einer ebenen Anlagefläche (42), die das Loch (46) umgibt, wobei die außenliegende Ringflächen (24, 26) der Vorderseite (14) oder der Rückseite (16) des scheibenförmigen Körpers (12) dazu ausgebildet ist, sich in die ebene Anlagefläche (42) einzuprägen, oder in die Anlagefläche (42) eingeprägt ist.

13. Verfahren zur Losdrehsicherung einer Schraubverbindung (48) mittels einer Schraubverbindung (48) nach einem der vorherigen Ansprüche, aufweisend:
Verwenden des scheibenförmigen Körpers (12) als eine Unterlegscheibe für die Schraube (30) mit dem Schraubenkopf (32), der eine profilierte Unterseite (36) aufweist, oder für die Mutter (38), die die profilierte Unterseite (40) aufweist, und
Anziehen der Schraube (30) oder der Mutter (38), wobei:
- sich die profilierte Unterseite (36; 40) der Schraube (30) oder der Mutter (38) in den innenliegenden Ringabschnitt (20, 22) von einer von der Vorderseite (14) und der Rückseite (16) des scheibenförmigen Körpers (12) einprägt; und
- sich der außenliegende Ringabschnitt (24, 26) der anderen von der Vorderseite (14) und der Rückseite (16) des scheibenförmigen Körpers (12) in eine ebene Anlagefläche (42) eines Bauteils (44) einprägt.

14. Verfahren nach Anspruch 13, wobei:
der scheibenförmige Köper (12) beidseitig verwendbar ist, mit wahlweise der Vorderseite (14) oder der Rückseite (16) in Kontakt mit dem Bauteil (44).

## Claims

1. A screw connection (48) having a device (10) for securing the screw connection (48) against loosening, wherein the device (10) has:
a disc-shaped body (12) having a front side (14), a rear side (16) and a, preferably central, through bore (18) which connects the front side (14) and the rear side (16);
wherein the front side (14) and the rear side (16) have in each case an inner annular face (20, 22) which is flat, and an outer annular face (24, 26) which is profiled;
wherein the screw connection (48) furthermore has:
a screw (30) having a screw head (32) which has a profiled lower side (36) that is configured for indenting the inner annular face (20, 22) of the front side (14) or of the rear side (16) of the disc-shaped body (12), or that is indented in the inner annular face (20, 22) of the front side (14) or of the rear side (16) of the disc-shaped body (12); or
a nut (38) having a profiled lower side (40) that is configured for indenting the inner annular face (20, 22) of the front side (14) or of the rear side (16) of the disc-shaped body (12), or that is indented in the inner annular face (20, 22) of the front side (14) or of the rear side (16) of the disc-shaped body (12).

2. The screw connection (48) according to Claim 1, wherein:
the inner annular face (20, 22) and the outer annular face (24, 26) of the front side (14) and/or
of the rear side (16) are mutually adjacent.

3. The screw connection (48) according to Claim 1 or Claim 2, wherein:
the disc-shaped body (12) has an internal diameter that is adjacent to the inner annular face (20, 22) of the front side (14) and/or of the rear side (16); and/or
the disc-shaped body (12) has an external diameter that is adjacent to the outer annular face (24, 26) of the front side (14) and/or of the rear side (16).

4. The screw connection (48) according to one of the preceding claims, wherein:
the inner annular faces (20, 22) of the front side (14) and of the rear side (16) are mutually mirror-symmetrical in relation to a central plane of the disc-shaped body (12); and/or
the outer annular faces (24, 26) of the front side (14) and of the rear side (16) are mutually mirror-symmetrical in relation to a central plane of the disc-shaped body (12); and/or
the front side (14) and the rear side (16) are substantially mutually mirror-symmetrical in relation to a central plane of the disc-shaped body (12) .

5. The screw connection (48) according to one of the preceding claims, wherein:
a surface area of the outer annular face (24, 26) of the front side (14) and/or of the rear side (16) is in a range between 25% and 200%, preferably in a range between 50% and 100%, particularly preferably in a range between 50% and 75%, of a surface area of the inner annular face (20, 22) of the front side (14) and/or of the rear side (16); and/or
an annular width of the inner annular face (20, 22) of the front side (14) and/or of the rear side (16) is smaller than, equal to, or larger than an annular width of the outer annular face (24, 26) of the front side (14) and/or of the rear side (16); and/or
the inner annular face (20, 22) of the front side (14) and/or of the rear side (16) in terms of the area is smaller than, equal to, or larger than the outer annular face (24, 26) of the front side (14) and/or of the rear side (16).

6. The screw connection (48) according to one of the preceding claims, wherein:
the disc-shaped body (12) is configured as a washer.

7. The screw connection (48) according to one of the preceding claims, wherein:
the outer annular face (24, 26) of the front side (14) and/or of the rear side (16) is configured for indenting a contact face (42) of a component (44) to be connected by means of the screw connection (48) .

8. The screw connection (48) according to one of the preceding claims, wherein:
the outer annular face (24, 26) of the front side (14) and/or of the rear side (16) stands proud of the inner annular face (20, 22) of the front side (14) and/or of the rear side (16).

9. The screw connection (48) according to one of the preceding claims, wherein:
the outer annular face (24, 26) of the front side (14) and/or of the rear side (16) is ribbed; and/or the outer annular face (24, 26) of the front side (14) and/or of the rear side (16) has a plurality of ribs (28), preferably radial ribs, wherein a length (L) of the ribs (28) is preferably larger than a width (B) and/or a height (H) of the ribs (28), and/or a height (H) of the ribs (28) is constant along a length (L) of the ribs (28).

10. The screw connection (48) according to one of the preceding claims, wherein:
the outer annular face (24, 26) of the front side (14) and/or of the rear side (16) is toothed and/or has a plurality of mutually spaced-apart protrusions, preferably nubs or teeth.

11. The screw connection (48) according to one of the preceding claims, wherein the screw head (32) or the nut (38) has an external diameter which:
is equal to or smaller than an external diameter of the inner annular face (20, 22) of the front side (14) and/or of the rear side (16) of the disc-shaped body (12); and/or
is equal to or smaller than an internal diameter of the outer annular face (24, 26) of the front side (14) and/or of the rear side (16) of the disc-shaped body (12).

12. The screw connection (48) according to one of the preceding claims, furthermore having:
a component (44) having a bore (46) and a flat contact face (42) that surrounds the bore (46),
wherein the outer annular face (24, 26) of the front side (14) or of the rear side (16) of the disc-shaped body (12) is configured for indenting the flat contact face (42), or is indented in the contact face (42).

13. A method for securing a screw connection (48) against loosening by means of a screw connection (48) according to one of the preceding claims, said method comprising the following method steps:
using the disc-shaped body (12) as a washer for the screw (30) having the screw head (32) which has a profiled lower side (36), or for the nut (38) which has the profiled lower side (40); and
tightening the screw (30) or the nut (38), wherein:
- the profiled lower side (36; 40) of the screw (30) or of the nut (38) indents the inner annular portion (20, 22) of one of the front side (14) and the rear side (16) of the disc-shaped body (12); and
- the outer annular portion (24, 26) of the other one of the front side (14) and the rear side (16) of the disc-shaped body (12) indents a flat contact face (42) of a component (44).

14. The method according to Claim 13, wherein:
both sides of the disc-shaped body (12) are useable,
the front side (14) or the rear side (16) selectively being in contact with the component (44) .

## Revendications

1. Assemblage vissé (48) comprenant un dispositif (10) pour la protection contre le desserrage de l'assemblage vissé (48), le dispositif (10) comprenant :
un corps en forme de disque (12) ayant un côté avant (14), un côté arrière (16) et un trou traversant (18), de préférence central, qui relie le côté avant (14) au côté arrière (16),
le côté avant (14) et le côté arrière (16) présentant chacun une surface annulaire intérieure (20, 22) qui est plane et une surface annulaire extérieure (24, 26) qui est profilée,
l'assemblage vissé (48) comprenant en outre :
une vis (30) munie d'une tête de vis (32), qui présente un côté inférieur profilé (36), qui est configuré pour s'empreindre dans la surface annulaire intérieure (20, 22) du côté avant (14) ou du côté arrière (16) du corps en forme de disque (12), ou qui est empreint dans la surface annulaire intérieure (20, 22) du côté avant (14) ou du côté arrière (16) du corps en forme de disque (12), ou
un écrou (38) muni d'un côté inférieur profilé (40), qui est configuré pour s'empreindre dans la surface annulaire intérieure (20, 22) du côté avant (14) ou du côté arrière (16) du corps en forme de disque (12), ou qui est empreint dans la surface annulaire intérieure (20, 22) du côté avant (14) ou du côté arrière (16) du corps en forme de disque (12).

2. Assemblage vissé (48) selon la revendication 1, dans lequel :
la surface annulaire intérieure (20, 22) et la surface annulaire extérieure (24, 26) du côté avant (14) et/ou du côté arrière (16) sont adjacentes l'une à l'autre.

3. Assemblage vissé (48) selon la revendication 1 ou la revendication 2, dans lequel :
le corps en forme de disque (12) présente un diamètre intérieur, auquel la surface annulaire intérieure (20, 22) du côté avant (14) et/ou du côté arrière (16) est adjacente ; et/ou
le corps en forme de disque (12) présente un diamètre extérieur auquel la surface annulaire extérieure (24, 26) du côté avant (14) et/ou du côté arrière (16) est adjacente.

4. Assemblage vissé (48) selon l'une quelconque des revendications précédentes, dans lequel :
les surfaces annulaires intérieures (20, 22) du côté avant (14) et du côté arrière (16) sont symétriques l'une de l'autre par rapport à un plan médian du corps en forme de disque (12) ; et/ou
les surfaces annulaires extérieures (24, 26) du côté avant (14) et du côté arrière (16) sont symétriques l'une de l'autre par rapport à un plan médian du corps en forme de disque (12) ; et/ou
le côté avant (14) et le côté arrière (16) sont essentiellement symétriques l'une de l'autre par rapport à un plan médian du corps en forme de disque (12) .

5. Assemblage vissé (48) selon l'une quelconque des revendications précédentes, dans lequel :
une superficie de la surface annulaire extérieure (24, 26) du côté avant (14) et/ou du côté arrière (16) se situe dans une plage comprise entre 25 % et 200 %, de préférence dans une plage comprise entre 50 % et 100 %, de manière particulièrement préférée dans une plage comprise entre 50 % et 75 %, d'une superficie de la surface annulaire intérieure (20, 22) du côté avant (14) et/ou du côté arrière (16) ; et/ou
une largeur annulaire de la surface annulaire intérieure (20, 22) du côté avant (14) et/ou du côté arrière (16) est inférieure, égale ou supérieure à une largeur annulaire de la surface annulaire extérieure (24, 26) du côté avant (14) et/ou du côté arrière (16) ; et/ou
la surface annulaire intérieure (20, 22) du côté avant (14) et/ou du côté arrière (16) est inférieure, égale ou supérieure, en termes de surface, à la surface annulaire extérieure (24, 26) du côté avant (14) et/ou du côté arrière (16).

6. Assemblage vissé (48) selon l'une quelconque des revendications précédentes, dans lequel :
le corps en forme de disque (12) est configuré sous la forme d'une rondelle.

7. Assemblage vissé (48) selon l'une quelconque des revendications précédentes, dans lequel :
la surface annulaire extérieure (24, 26) du côté avant (14) et/ou du côté arrière (16) est configurée pour s'empreindre dans une surface d'appui (42) d'un composant (44) à assembler au moyen de l'assemblage vissé (48).

8. Assemblage vissé (48) selon l'une quelconque des revendications précédentes, dans lequel :
la surface annulaire extérieure (24, 26) du côté avant (14) et/ou du côté arrière (16) est surélevée par rapport à la surface annulaire intérieure (20, 22) du côté avant (14) et/ou du côté arrière (16).

9. Assemblage vissé (48) selon l'une quelconque des revendications précédentes, dans lequel :
la surface annulaire extérieure (24, 26) du côté avant (14) et/ou du côté arrière (16) est nervurée ; et/ou
la surface annulaire extérieure (24, 26) du côté avant (14) et/ou du côté arrière (16) présente plusieurs nervures (28), de préférence des nervures radiales, de préférence une longueur (L) des nervures (28) étant supérieure à une largeur (B) et/ou une hauteur (H) des nervures (28) et/ou une hauteur (H) des nervures (28) étant constante le long d'une longueur (L) des nervures (28).

10. Assemblage vissé (48) selon l'une quelconque des revendications précédentes, dans lequel :
la surface annulaire extérieure (24, 26) du côté avant (14) et/ou du côté arrière (16) est dentée et/ou présente plusieurs saillies espacées les unes des autres, de préférence des picots ou des dents.

11. Assemblage vissé (48) selon l'une quelconque des revendications précédentes, dans lequel la tête de vis (32) ou l'écrou (38) présente un diamètre extérieur qui :
est égal ou inférieur à un diamètre extérieur de la surface annulaire intérieure (20, 22) du côté avant (14) et/ou du côté arrière (16) du corps en forme de disque (12) ; et/ou
est égal ou inférieur au diamètre intérieur de la surface annulaire extérieure (24, 26) du côté avant (14) et/ou du côté arrière (16) du corps en forme de disque (12).

12. Assemblage vissé (48) selon l'une quelconque des revendications précédentes, comprenant en outre :
un composant (44) comportant un trou (46) et une surface d'appui plane (42), qui entoure le trou (46), les surfaces annulaires extérieures (24, 26) du côté avant (14) ou du côté arrière (16) du corps en forme de disque (12) étant configurées pour s'empreindre dans la surface d'appui plane (42) ou étant empreintes dans la surface d'appui (42).

13. Procédé de protection contre le desserrage d'un assemblage vissé (48) au moyen d'un assemblage vissé (48) selon l'une quelconque des revendications précédentes, comprenant :
l'utilisation du corps en forme de disque (12) en tant que rondelle pour la vis (30) comprenant la tête de vis (32) qui présente un côté inférieur profilé (36), ou pour l'écrou (38) qui présente le côté inférieur profilé (40), et
le serrage de la vis (30) ou de l'écrou (38), dans lequel :
- le côté inférieur profilé (36 ; 40) de la vis (30) ou de l'écrou (38) s'empreint dans la section annulaire intérieure (20, 22) de l'un parmi le côté avant (14) et le côté arrière (16) du corps en forme de disque (12) ; et
- la section annulaire extérieure (24, 26) de l'autre parmi le côté avant (14) et le côté arrière (16) du corps en forme de disque (12) s'empreint dans une surface d'appui plane (42) d'un composant (44).

14. Procédé selon la revendication 13, dans lequel :
le corps en forme de disque (12) est utilisable des deux côtés, avec au choix le côté avant (14) ou le côté arrière (16) en contact avec le composant (44).
